# EUROPEAN PATENT APPLICATION

(11) **EP 4 693 978 A1**
(43) Date of publication of application: **11.02.2026**
(21) Application number: 23929519.9
(22) Date of filing: 31.03.2023
(51) Int. Cl.: H04L 1/1812

(54) **INFORMATION INDICATION METHOD AND APPARATUS, AND SYSTEM, COMMUNICATION DEVICE AND STORAGE MEDIUM**

(71) Applicant: Beijing Xiaomi Mobile Software Co., Ltd., Beijing 100085 (CN)
(72) Inventor: LIU, Min, Beijing 100085 (CN); JIANG, Xiaowei, Beijing 100085 (CN); ZHU, Yajun, Beijing 100085 (CN); LI, Yuanyuan, Beijing 100085 (CN); MA, Xinyu, Beijing 100085 (CN)
(74) Representative: Zimmermann, Tankred Klaus
(86) International application number: PCT/CN2023/085778
(87) International publication number: WO 2024/197936

(57) **Abstract**

Provided in the embodiments of the present disclosure are an information indication method and apparatus, and a system, a communication device and a storage medium. The method comprises: sending a message 3Msg3, wherein the Msg3 comprises first information, and the first information includes at least one piece of the following: re-transmission request information of information which is transmitted on a common physical uplink control channel (PUCCH), and re-transmission capability information of the information which is transmitted on the common PUCCH. As such, a network device can clearly determine, on the basis of re-transmission request information and/or re-transmission capability information regarding an access network device, whether to perform re-transmission of information which is transmitted on a common PUCCH, and a re-transmission mechanism for the information which is transmitted on the common PUCCH is clarified, such that the re-transmission of the information which is transmitted on the common PUCCH is more reliable.

## Description

### FIELD

The present disclosure relates to, but is not limited to, the field of wireless communication technologies, and in particular relates to an information indication method, an information indication apparatus, an information indication system, a communication device and a storage medium.

### BACKGROUND

In a non-terrestrial network (NTN), the distance between a terminal and a satellite or other non-terrestrial network device is too far, resulting in insufficient uplink coverage. For example, when uplink signals are sent on a common physical uplink control channel (PUCCH), the coverage of the uplink signals may be limited. For this situation, a hybrid automatic repeat request (HARQ) feedback mechanism may be introduced.

### SUMMARY

Embodiments of the present disclosure provide an information indication method, an information indication apparatus, an information indication system, a communication device and a storage medium.

According to a first aspect of embodiments of the present disclosure, there is provided an information indication method, performed by a terminal, the information indication method including: sending a message 3 (Msg3), where the Msg3 includes first information, and the first information includes at least one of: repetition request information for information transmitted on a common PUCCH, or repetition capability information for information transmitted on a common PUCCH.

In an embodiment, the information transmitted on the common PUCCH is HARQ acknowledgement feedback information sent for a message 4 (Msg4).

In an embodiment, a sub-protocol data unit (subPDU) carried by the Msg3 carries the first information.

In an embodiment, the subPDU includes a media access control (MAC) subheader and a first MAC control element (CE), and the first MAC CE carries the first information.

In an embodiment, a logical channel identifier (LCID) carried by the MAC subheader indicates the first MAC CE.

In an embodiment, the LCID is an identifier determined from reserved LCIDs.

In an embodiment, a size of the first MAC CE is 0.

In an embodiment, the information indication method further including: determining that the subPDU does not include the first MAC CE, and performing rate matching by padding.

In an embodiment, the Msg3 further includes a cell radio network temporary identifier (C-RNTI) or a common control channel (CCCH) service data unit (SDU).

According to a second aspect of embodiments of the present disclosure, there is provided an information indication method, performed by an access network device, the information indication method including: receiving Msg3, where the Msg3 includes first information, and the first information includes at least one of: repetition request information for information transmitted on a common PUCCH, or repetition capability information for information transmitted on a common PUCCH.

In an embodiment, the information transmitted on the common PUCCH is HARQ acknowledgement feedback information sent for Msg4.

In an embodiment, a subPDU carried by the Msg3 carries the first information.

In an embodiment, the subPDU includes an MAC subheader and a first MAC CE, and the first MAC CE carries the first information.

In an embodiment, an LCID carried by the MAC subheader indicates the first MAC CE.

In an embodiment, the LCID is an identifier determined from reserved LCIDs.

In an embodiment, a size of the first MAC CE is 0.

In an embodiment, the Msg3 further includes a C-RNTI or a CCCH SDU.

According to a third aspect of embodiments of the present disclosure, there is provided an information indication apparatus, including a sending module configured to send Msg3, where the Msg3 includes first information, and the first information includes at least one of: repetition request information for information transmitted on a common PUCCH, or repetition capability information for information transmitted on a common PUCCH.

According to a fourth aspect of embodiments of the present disclosure, there is provided an information indication apparatus, including a receiving module configured to receive Msg3, where the Msg3 includes first information, and the first information includes at least one of: repetition request information for information transmitted on a common PUCCH, or repetition capability information for information transmitted on a common PUCCH.

According to a fifth aspect of embodiments of the present disclosure, there is provided an information indication system, including: a terminal configured to execute any information indication method performed by the terminal in the present disclosure, and an access network device configured to execute any information indication method performed by the access network device in the present disclosure.

According to a sixth aspect of embodiments of the present disclosure, there is provided a communication device, including a processor, and a memory for storing instructions executable by the processor, where the processor is configured to implement the information indication method described in any embodiment of the present disclosure when running the executable instructions.

According to a seventh aspect of embodiments of the present disclosure, there is provided a computer storage medium having stored therein executable programs that, when executed by a processor, cause the information indication method described in any embodiment of the present disclosure to be implemented.

In the embodiments of the present disclosure, Msg3 is sent, where the Msg3 includes first information, and the first information includes at least one of: repetition request information for information transmitted on a common PUCCH, or repetition capability information for information transmitted on a common PUCCH. Since the first information includes the repetition request information for the information transmitted on the common PUCCH and/or the repetition capability information for the information transmitted on the common PUCCH, after receiving the first information sent via the Msg3, the access network device may perform the repetition of the information transmitted on the common PUCCH based on the repetition request information for the information transmitted on the common PUCCH contained in the first information and/or determine whether the terminal has the capability of performing the repetition of the information transmitted on the common PUCCH based on the repetition capability information for the information transmitted on the common PUCCH contained in the first information. In this way, the network device may clearly determine whether to perform the repetition of the information transmitted on the common PUCCH based on the repetition request information and/or the repetition capability information for the access network device, and clarify the repetition mechanism for the information transmitted on the common PUCCH, thereby making the repetition of the information transmitted on the common PUCCH more reliable.

### BRIEF DESCRIPTION OF THE DRAWINGS

FIG. 1 is a schematic block diagram illustrating a wireless communication system according to an illustrative embodiment.
FIG. 2 is a schematic flow chart illustrating an information indication method according to an illustrative embodiment.
FIG. 3 is a schematic flow chart illustrating an information indication method according to an illustrative embodiment.
FIG. 4 is a schematic flow chart illustrating an information indication method according to an illustrative embodiment.
FIG. 5 is a schematic flow chart illustrating an information indication method according to an illustrative embodiment.
FIG. 6 is a schematic flow chart illustrating an information indication method according to an illustrative embodiment.
FIG. 7 is a schematic diagram illustrating an MAC subheader according to an illustrative embodiment.
FIG. 8 is a schematic diagram illustrating an information indication apparatus according to an illustrative embodiment.
FIG. 9 is a schematic diagram illustrating an information indication apparatus according to an illustrative embodiment.
FIG. 10 is a schematic block diagram illustrating a terminal according to an illustrative embodiment.
FIG. 11 is a block diagram illustrating a base station according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with some aspects related to embodiments of the present disclosure as recited in the appended claims.

Terms used herein in the embodiments of the present disclosure are only for the purpose of describing specific embodiments, but should not be construed to limit embodiments of the present disclosure. As used in the embodiments of the present disclosure and the appended claims, "a/an", and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

For the purpose of brevity and ease of understandings, the term used herein to characterize size relationships is "greater than" or "less than". However, those skilled in the art may understand that the term "greater than" also covers the meaning of "greater than or equal to", and the term "less than" also covers the meaning of "less than or equal to".

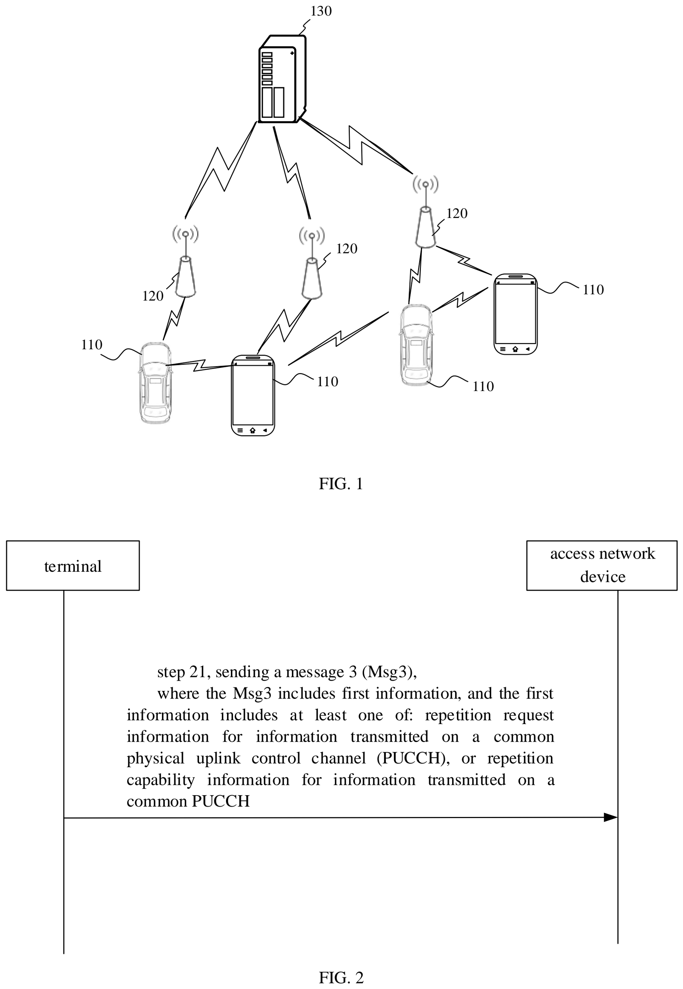

Reference is made to FIG. 1, which is a schematic block diagram illustrating a wireless communication system provided in an embodiment of the present disclosure. As shown in FIG. 1, the wireless communication system is a communication system based on a mobile communication technology, and may include several user equipments (UEs) 110 and several base stations 120.

The UE 110 may be a device that provides voice and/or data connectivity to a user. The UE 110 may communicate with one or more core networks via a radio access network (RAN). The UE 110 may be an Internet of Things terminal, such as a sensor device, a mobile phone and a computer with an Internet of Things terminal. For example, the UE 110 may be a fixed, portable, pocket-sized, handheld, computer built-in or vehicle-mounted apparatus. For example, the UE 110 may be a station (STA), a subscriber unit, a subscriber station, a mobile station, a mobile, a remote station, an access point, a remote terminal, an access terminal, a user terminal, a user agent, a user device, or a user equipment. Alternatively, the UE 110 may also be a device of an unmanned aerial vehicle. Alternatively, the UE 110 may also be a vehicle-mounted device, for example, a driving computer with a wireless communication function, or a wireless UE externally connected with a driving computer. Alternatively, the UE 110 may also be a roadside device, such as a street lamp, a signal lamp or other roadside devices with a wireless communication function.

The base station 120 may be a network side device in the wireless communication system. The wireless communication system may be a 4th generation mobile communication (4G) system, also referred to as a long term evolution (LTE) system. Alternatively, the wireless communication system may also be a 5th generation mobile communication network technology (5G) system, also referred to as a new radio (NR) system or a 5G NR system. Alternatively, the wireless communication system may also be a next generation system of the 5G system. The access network in the 5G system may be referred to as a new generation-radio access network (NG-RAN).

The base station 120 may be an evolved base station (eNB) used in the 4G system. Alternatively, the base station 120 may also be a base station (gNB) of a centralized-distributed architecture in the 5G system. When the base station 120 adopts the centralized-distributed architecture, it usually includes a centralized unit (CU) and at least two distributed units (DUs). A protocol stack of a packet data convergence protocol (PDCP) layer, a radio link control (RLC) layer and a media access control (MAC) layer is provided in the centralized unit. A protocol stack of a physical (PHY) layer is provided in the distributed unit. The specific implementation of the base station 120 is not limited in the embodiments of the present disclosure.

A wireless connection may be established between the base station 120 and the UE 110 via a wireless radio. In different embodiments, the wireless radio is a wireless radio based on the 4G standard. Alternatively, the wireless radio is a wireless radio based on the 5G standard. For example, the wireless radio is a new radio. Alternatively, the wireless radio may also be a wireless radio based on the next generation mobile communication network technology standard of the 5G.

In some embodiments, an end to end (E2E) connection may also be established between the UEs 110, for example, a vehicle to vehicle (V2V) communication, a vehicle to infrastructure (V2I) communication and a vehicle to pedestrian (V2P) communication in a vehicle to everything (V2X) communication, or the like.

Here, the above UE may be considered as the terminal in the following embodiments.

In some embodiments, the wireless communication system may further include a network management device 130.

Several base stations 120 are connected to the network management device 130, respectively. The network management device 130 may be a core network device in the wireless communication system, for example, the network management device 130 may be a mobility management entity (MME) in an evolved packet core (EPC). Alternatively, the network management device may be other core network devices, such as a serving gateway (SGW), a public data network gateway (PGW), a policy and charging rules function (PCRF), a home subscriber server (HSS), or the like. The implementation form of the network management device 13 is not limited in the embodiments of the present disclosure.

In order to facilitate the understanding by those skilled in the art, multiple implementations are listed in the embodiments of the present disclosure to clearly illustrate the technical solutions in the embodiments of the present disclosure. Certainly, those skilled in the art may understand that the multiple implementations provided in the embodiments of the present disclosure may be executed alone, or may be executed together with the methods in other embodiments in the embodiments of the present disclosure, or may be executed alone or in combination with some methods in other related technologies, which is not limited in the embodiments of the present disclosure.

In order to better understand the embodiments of the present disclosure, a wireless communication scenario is described below.

In an embodiment, in an NTN network, the distance between a terminal and a satellite or other non-terrestrial network device is too far, resulting in insufficient uplink coverage. Especially for uplink signals sent on a common PUCCH, since there is no repetition mechanism, the coverage of the uplink signals sent on the common PUCCH is limited. For example, in an initial access process, Msg3 and Msg4 are mainly used to perform contention resolution. The terminal carries a radio resource control (RRC) setup request via the Msg3. If before a timer expires, the terminal detects Msg4 information sent by a base station, that is, contention resolution information, which contains a UE contention resolution identity MAC CE, and the content of the UE contention resolution identity MAC CE is consistent with the content of a CCCH SDU sent by the terminal via the Msg3, then the random access is considered successful. If the terminal successfully receives the Msg4, it sends HARQ acknowledgement (HARQ-ACK) information to the base station. If the terminal fails to receive the Msg4, it does not feed back any information.

In an embodiment, the HARQ-ACK feedback repetition request or capability for the Msg4 sent by the terminal may be sent in one of the following ways: based on a physical random access channel (PRACH) preamble and/or occasion, a high-layer signaling in the Msg3 physical uplink shared channel (PUSCH), or a physical layer signaling in the Msg3 PUSCH.

In an embodiment, a reserved bit in an MAC header in the Msg3 is used for indication. For example, for one reserved bit, when the value of the bit is 1, it indicates that the terminal sends an Msg4 HARQ-ACK repetition request or the terminal has the Msg4 HARQ-ACK repetition capability; otherwise, the value of the bit is 0.

It should be noted that if the reserved bit is used for indication, then there are two reserved bits in Msg3 during the initial access process, and there is only one reserved bit in Msg3 during the non-initial access process. If the reserved bit is used for repetition indication, it means that there will be no additional reserved resources for other functions in the future, which will bring difficulties to the subsequent signaling design.

As shown in FIG. 2, this embodiment provides an information indication method, performed by a terminal and including the following step.

At step 21, Msg3 is sent.

The Msg3 includes first information, and the first information includes at least one of: repetition request information for information transmitted on a common PUCCH, or repetition capability information for information transmitted on a common PUCCH.

In an embodiment, the information transmitted on the common PUCCH may be HARQ acknowledgement feedback information sent for Msg4. It should be noted that the embodiments in the present disclosure are illustrated by way of example with respect to the HARQ acknowledgement feedback information sent for the Msg4, but the HARQ acknowledgement feedback information sent for the Msg4 does not constitute a limitation on the information transmitted on the common PUCCH, that is, the information transmitted on the common PUCCH is not limited to the HARQ acknowledgement feedback information sent for the Msg4. For example, the term "HARQ acknowledgement feedback information sent for Msg4" in the present disclosure may be replaced by "information transmitted on the common PUCCH". The term "HARQ acknowledgement feedback information" may be replaced by "HARQ-ACK feedback information".

Here, the terminal involved in the present disclosure may be, but is not limited to, a mobile phone, a wearable device, a vehicle-mounted terminal, a road side unit (RSU), a smart home terminal, an industrial sensor device and/or a medical device, or the like. In some embodiments, the terminal may be a Redcap terminal or an NR terminal of a predetermined version (e.g., an R17 NR terminal). No limitation is given here.

The access network device involved in the present disclosure may be a base station, which may be a base station in the fifth generation mobile communication technology or other evolved base stations, and is not limited here.

In an embodiment, Msg3 is sent based on configuration information, where the Msg3 includes first information, and the first information includes at least one of: repetition request information for HARQ acknowledgement feedback information sent for Msg4, or repetition capability information for HARQ acknowledgement feedback information sent for Msg4. The configuration information is sent by the network device via system information block (SIB) information in a broadcast manner.

In an embodiment, the repetition request information is used to request the repetition of the HARQ acknowledgement feedback information sent for the Msg4.

In an embodiment, the repetition capability information indicates whether the terminal supports or does not support the repetition of the HARQ acknowledgement feedback information sent for the Msg4. It should be noted that if the repetition capability information indicates that the terminal supports the repetition of the HARQ acknowledgement feedback information sent for the Msg4, the terminal may implement the repetition of the HARQ acknowledgement feedback information sent for the Msg4. For example, after sending the repetition request information to the base station and receiving repetition acknowledgement information from the base station, the terminal may perform the repetition of the HARQ acknowledgement feedback information sent for the Msg4.

In an embodiment, Msg3 is sent, where the Msg3 includes first information, and the first information includes repetition request information for the HARQ acknowledgement feedback information sent for the Msg4. The first information may be indicated by a first information field. When the Msg3 includes the first information field, it indicates that the first information includes repetition request information for the HARQ acknowledgement feedback information sent for the Msg4. It should be noted that, when the first information includes the repetition request information for the HARQ acknowledgement feedback information sent for the Msg4, it is determined by default that the terminal has the repetition request capability for the HARQ acknowledgement feedback information sent for the Msg4.

In an embodiment, Msg3 is sent, where the Msg3 includes first information, and the first information includes repetition capability information for the HARQ acknowledgement feedback information sent for the Msg4. For example, the repetition capability information indicates that the terminal does not have the repetition capability, in which case the terminal cannot execute the repetition mechanism; or the repetition capability information indicates that the terminal has the repetition capability, in which case the terminal can execute the repetition mechanism. For example, the first information may be indicated by a second information field. When the Msg3 does not include the second information field, it indicates that the terminal does not have the repetition capability; and when the Msg3 includes the second information field, it indicates that the terminal has the repetition capability. It should be noted that after the terminal sends the first information including the repetition capability information for the HARQ acknowledgement feedback information sent for the Msg4 to the access network device, the repetition may be performed directly, or the repetition may be performed only after the repetition request information for the HARQ acknowledgement feedback information sent for the Msg4 is sent to the access network device, which is not limited here.

In an embodiment, a subPDU carried by the Msg3 carries the first information, where the first information includes at least one of: repetition request information for HARQ acknowledgement feedback information sent for Msg4, or repetition capability information for HARQ acknowledgement feedback information sent for Msg4.

In an embodiment, Msg3 is sent, where the Msg3 includes first information, and the first information includes at least one of: repetition request information for HARQ acknowledgement feedback information sent for Msg4, or repetition capability information for HARQ acknowledgement feedback information sent for Msg4; and the subPDU includes an MAC subheader and a first MAC CE, and the first MAC CE carries the first information.

In an embodiment, Msg3 is sent, where the Msg3 includes first information, and the first information includes at least one of: repetition request information for HARQ acknowledgement feedback information sent for Msg4, or repetition capability information for HARQ acknowledgement feedback information sent for Msg4; and it is determined that the subPDU does not include the first MAC CE, and rate matching is performed by padding. Here, the padding may be zero padding or padding with a non-zero value.

In an embodiment, Msg3 is sent, where the Msg3 includes first information, and the first information includes at least one of: repetition request information for HARQ acknowledgement feedback information sent for Msg4, or repetition capability information for HARQ acknowledgement feedback information sent for Msg4; and the Msg3 is used to carry a C-RNTI or a CCCH SDU.

In an embodiment, Msg3 is sent, where the Msg3 includes first information, and the first information includes at least one of: repetition request information for HARQ acknowledgement feedback information sent for Msg4, or repetition capability information for HARQ acknowledgement feedback information sent for Msg4; and the subPDU includes an MAC subheader and a first MAC CE, and the first MAC CE carries the first information. An LCID carried by the MAC subheader indicates the first MAC CE.

In an embodiment, Msg3 is sent, where the Msg3 includes first information, and the first information includes at least one of: repetition request information for HARQ acknowledgement feedback information sent for Msg4, or repetition capability information for HARQ acknowledgement feedback information sent for Msg4; and the subPDU includes an MAC subheader and a first MAC CE, and the first MAC CE carries the first information. An LCID of the MAC subheader indicates the first MAC CE, and the size of the first MAC CE is 0.

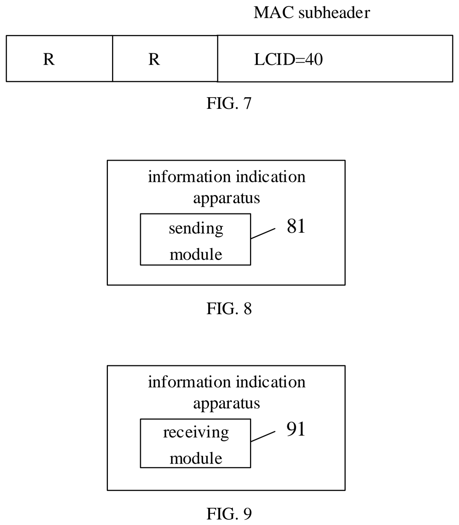

In an embodiment, Msg3 is sent, where the Msg3 includes first information, and the first information includes at least one of: repetition request information for HARQ acknowledgement feedback information sent for Msg4, or repetition capability information for HARQ acknowledgement feedback information sent for Msg4; the subPDU includes an MAC subheader and a first MAC CE, the first MAC CE indicates that the first information is carried, and the first MAC CE is identified by an LCID or extended LCID (eLCID) in the MAC subheader. The LCID or eLCID may be selected from reserved IDs in the related art. For example, IDs 37 to 42 are reserved LCIDs, and LCID=40 is selected from the IDs 37 to 42 to indicate the first MAC CE (as shown in FIG. 7). For example, IDs 64 to 292 are reserved eLCIDs, and eLCID=66 is selected from the IDs 64 to 292 to indicate the first MAC CE.

In an embodiment, an MAC subPDU including the first MAC CE includes an MAC subheader portion and a fixed-sized portion, where the size of the MAC CE portion is fixed to 0.

In an embodiment, Msg3 is sent, where the Msg3 includes first information, and the first information includes at least one of: repetition request information for HARQ acknowledgement feedback information sent for Msg4, or repetition capability information for HARQ acknowledgement feedback information sent for Msg4; and the subPDU includes an MAC subheader and a first MAC CE, and the first MAC CE indicates that the first information is carried. An LCID of the MAC subheader indicates the first MAC CE, and the LCID is an ID determined from the reserved LCIDs.

In an embodiment, whether to send Msg3 is determined based on a configuration result of a first threshold configured by the access network device and the repetition capability of the terminal, where the Msg3 includes first information, and the first information includes at least one of: repetition request information for HARQ acknowledgement feedback information sent for Msg4, or repetition capability information for HARQ acknowledgement feedback information sent for Msg4. The Msg3 is sent to the access network device.

In an embodiment, whether to send Msg3 is determined based on a configuration result of a first threshold configured by the access network device, the repetition capability of the terminal and the value of second information determined based on a downlink signal, where the Msg3 includes the first information, and the second information includes at least one of: a reference signal received power (RSRP), a reference signal received quality (RSRQ), or a signal to interference plus noise ratio (SINR); and the first information includes at least one of: repetition request information for HARQ acknowledgement feedback information sent for Msg4, or repetition capability information for HARQ acknowledgement feedback information sent for Msg4. The Msg3 is sent to the access network device.

In an embodiment, the downlink signal is a synchronization reference signal.

In an embodiment, the first threshold is configured via an SIB.

In an embodiment, it is determined that the first threshold is configured, the first threshold is less than a maximum threshold, the terminal has the repetition capability, the value of the second information is less than the first threshold, and it is determined to send Msg3 to the access network device, where the first information includes the repetition request information. The Msg3 is sent to the access network device.

In an embodiment, it is determined that the first threshold is not configured, the terminal has the repetition capability, and it is determined to send Msg3 to the access network device; or it is determined that the first threshold is configured, the first threshold is a maximum threshold, the terminal has the repetition capability, and it is determined to send Msg3 to the access network device, where the first information includes the repetition capability information. The Msg3 is sent to the access network device.

In the embodiments of the present disclosure, first information is sent to an access network device via Msg3, where the first information includes at least one of: repetition request information for information transmitted on a common PUCCH, or repetition capability information for information transmitted on a common PUCCH. Since the first information includes the repetition request information for the information transmitted on the common PUCCH and/or the repetition capability information for the information transmitted on the common PUCCH, after receiving the first information sent via the Msg3, the access network device may perform the repetition of the information transmitted on the common PUCCH based on the repetition request information for the information transmitted on the common PUCCH contained in the first information and/or determine whether the terminal has the capability of performing the repetition of the information transmitted on the common PUCCH based on the repetition capability information for the information transmitted on the common PUCCH contained in the first information. In this way, the access network device may clearly determine whether to perform the repetition of the information transmitted on the common PUCCH based on the repetition request information and/or the repetition capability information for the access network device, and clarify the repetition mechanism for the information transmitted on the common PUCCH, thereby making the repetition of the information transmitted on the common PUCCH more reliable.

It should be noted that those skilled in the art may understand that the methods provided in the embodiments of the present disclosure may be executed alone or together with some methods in the embodiments of the present disclosure or some methods in related technologies.

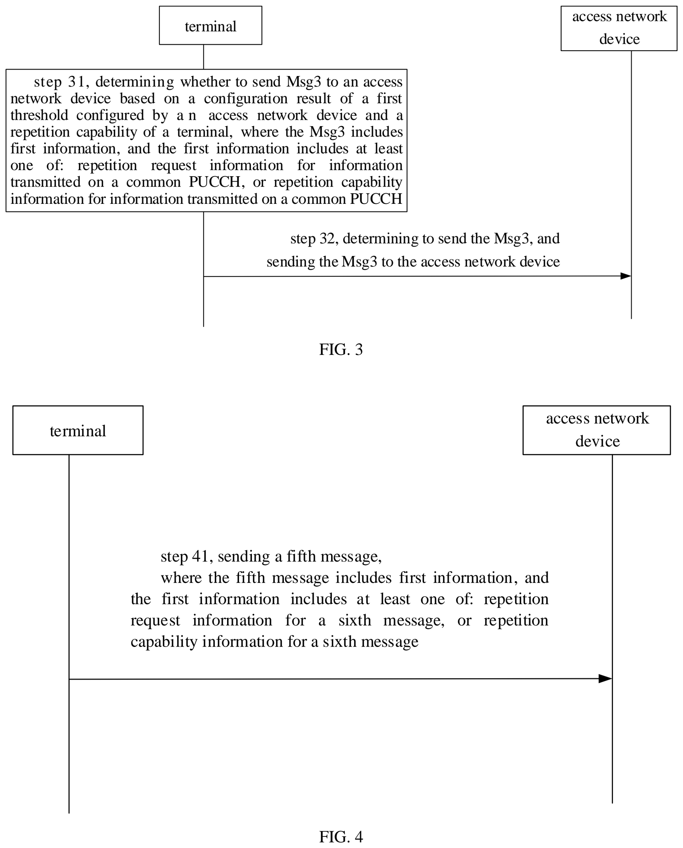

As shown in FIG. 3, this embodiment provides an information indication method, performed by a terminal and including the following steps.

At step 31, whether to send Msg3 to an access network device is determined based on a configuration result of a first threshold configured by the access network device and a repetition capability of the terminal, where the Msg3 includes first information, and the first information includes at least one of: repetition request information for information transmitted on a common PUCCH, or repetition capability information for information transmitted on a common PUCCH.

At step 32, it is determined to send the Msg3, and the Msg3 is sent to the access network device.

In an embodiment, the information transmitted on the common PUCCH is HARQ acknowledgement feedback information sent for Msg4.

In an embodiment, whether to send Msg3 is determined based on the configuration result of the first threshold configured by the access network device, the repetition capability of the terminal and the value of second information determined based on a downlink signal, where the Msg3 includes first information, and the second information includes at least one of: an RSRP, an RSRQ, or an SINR; and the first information includes at least one of: repetition request information for HARQ acknowledgement feedback information sent for Msg4, or repetition capability information for HARQ acknowledgement feedback information sent for Msg4. It is determined to send the Msg3, and the Msg3 is sent to the access network device.

In an embodiment, the downlink signal is a synchronization reference signal.

In an embodiment, the first threshold is configured via an SIB.

In an embodiment, it is determined that the first threshold is configured, the first threshold is less than a maximum threshold, the terminal has the repetition capability, the value of the second information is less than the first threshold, and it is determined to send Msg3 to the access network device, where the first information includes the repetition request information. The Msg3 is sent to the access network device.

In an embodiment, it is determined that the first threshold is not configured, the terminal has the repetition capability, and it is determined to send Msg3 to the access network device; or it is determined that the first threshold is configured, the first threshold is a maximum threshold, the terminal has the repetition capability, and it is determined to send Msg3 to the access network device, where the first information includes the repetition capability information. The Msg3 is sent to the access network device.

It should be noted that those skilled in the art may understand that the methods provided in the embodiments of the present disclosure may be executed alone or together with some methods in the embodiments of the present disclosure or some methods in related technologies.

As shown in FIG. 4, this embodiment provides an information indication method, performed by a terminal and including the following step.

At step 41, a fifth message is sent.

The fifth message includes first information, and the first information includes at least one of: repetition request information for a sixth message, or repetition capability information for a sixth message.

In an embodiment, the fifth message may be Msg3 or other information, which is not limited here.

In an embodiment, a fifth message is sent based on configuration information, where the fifth message includes first information, and the first information includes at least one of: repetition request information for a sixth message, or repetition capability information for a sixth message. The configuration information is sent by a network device via SIB information in a broadcast manner.

In an embodiment, a fifth message is sent, where the fifth message includes first information, and the first information includes repetition request information for a sixth message. The first information may be indicated by a first information field. When the fifth message includes the first information field, it indicates that the first information includes repetition request information for the sixth message. It should be noted that, when the first information includes the repetition request information for the sixth message, it is determined by default that the terminal has the repetition request capability for the sixth message.

In an embodiment, a fifth message is sent, where the fifth message includes first information, and the first information includes repetition capability information of the terminal for the sixth message. For example, the repetition capability information indicates that the terminal does not have the repetition capability, in which case the terminal cannot execute the repetition mechanism; or the repetition capability information indicates that the terminal has the repetition capability, in which case the terminal can execute the repetition mechanism. For example, the first information may be indicated by a second information field. When the fifth message does not include the second information field, it indicates that the terminal does not have the repetition capability; and when the fifth message includes the second information field, it indicates that the terminal has the repetition capability. It should be noted that after the terminal sends the first information including the repetition capability information of the terminal for the sixth message to the access network device, the repetition may be performed directly, or the repetition may be performed only after the repetition request information for the sixth message is sent to the access network device, which is not limited here.

In an embodiment, a subPDU carried by the fifth message carries the first information, where the first information includes at least one of: the repetition request information for the sixth message, or the repetition capability information for the sixth message.

In an embodiment, a fifth message is sent, where the fifth message includes first information, and the first information includes at least one of: repetition request information for a sixth message, or repetition capability information for a sixth message; and the subPDU includes an MAC subheader and a first MAC CE, and the first MAC CE carries the first information.

In an embodiment, a fifth message is sent, where the fifth message includes first information, and the first information includes at least one of: repetition request information for a sixth message, or repetition capability information for a sixth message; and it is determined that the subPDU does not include the first MAC CE, and rate matching is performed by padding. Here, the padding may be zero padding or padding with a non-zero value.

In an embodiment, a fifth message is sent, where the fifth message includes first information, and the first information includes at least one of: repetition request information for a sixth message, or repetition capability information for a sixth message; and the fifth message is used to carry a C-RNTI or a CCCH SDU.

In an embodiment, a fifth message is sent, where the fifth message includes first information, and the first information includes at least one of: repetition request information for a sixth message, or repetition capability information of the terminal for a sixth message; and the subPDU includes an MAC subheader and a first MAC CE, and the first MAC CE carries the first information. An LCID carried by the MAC subheader indicates the first MAC CE.

In an embodiment, the size of the first MAC CE is 0.

In an embodiment, a fifth message is sent, where the fifth message includes first information, and the first information includes at least one of: repetition request information for a sixth message, or repetition capability information for a sixth message; and the MAC information includes a first MAC CE, the first MAC CE indicates the first information, and the first MAC CE is identified by an LCID or eLCID in the MAC subheader. The LCID or eLCID may be selected from reserved IDs in the related art. For example, IDs 37 to 42 are reserved LCIDs, and LCID=40 is selected from the IDs 37 to 42 to indicate the first MAC CE (as shown in FIG. 7). For example, IDs 64 to 292 are reserved eLCIDs, and eLCID=66 is selected from the IDs 64 to 292 to indicate the first MAC CE.

In an embodiment, an MAC subPDU including the first MAC CE includes an MAC subheader portion and a fixed-sized portion, where the size of the MAC CE portion is fixed to 0.

In an embodiment, a fifth message is sent, where the fifth message includes first information, and the first information includes at least one of: repetition request information for a sixth message, or repetition capability information for a sixth message; and the subPDU includes an MAC subheader and a first MAC CE, and the first MAC CE indicates that the first information is carried. An LCID of the MAC subheader indicates the first MAC CE, and the LCID is an ID determined from the reserved LCIDs.

It should be noted that those skilled in the art may understand that the methods provided in the embodiments of the present disclosure may be executed alone or together with some methods in the embodiments of the present disclosure or some methods in related technologies.

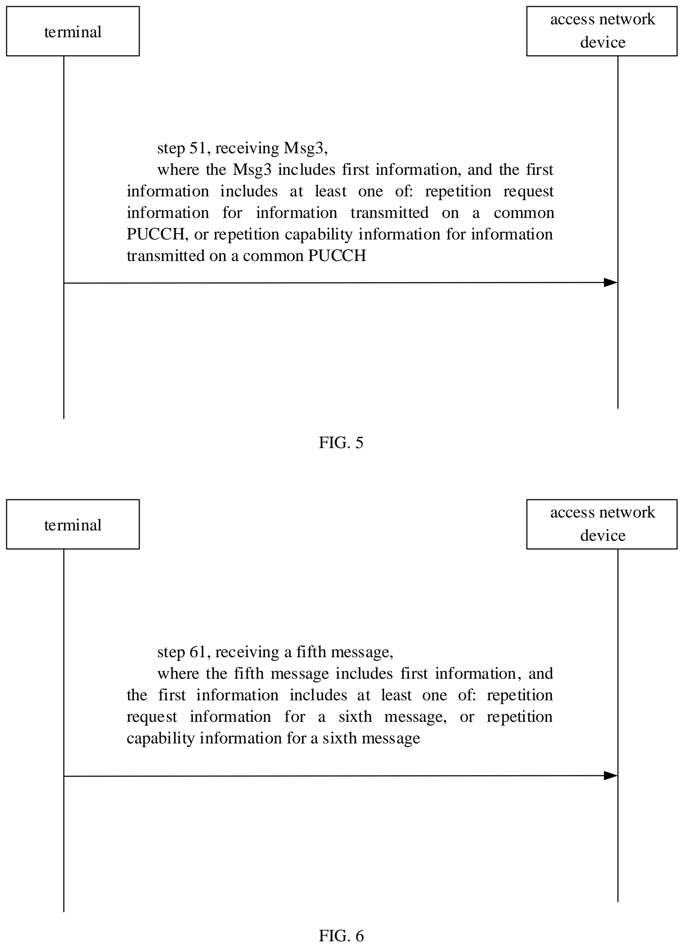

As shown in FIG. 5, this embodiment provides an information indication method, performed by an access network device and including the following step.

At step 51, Msg3 is received.

The Msg3 includes first information, and the first information includes at least one of: repetition request information for information transmitted on a common PUCCH, or repetition capability information for information transmitted on a common PUCCH.

In an embodiment, the information transmitted on the common PUCCH may be HARQ acknowledgement feedback information sent for Msg4. It should be noted that the embodiments in the present disclosure are illustrated by way of example with respect to the HARQ acknowledgement feedback information sent for the Msg4, but the HARQ acknowledgement feedback information sent for the Msg4 does not constitute a limitation on the information transmitted on the common PUCCH, that is, the information transmitted on the common PUCCH is not limited to the HARQ acknowledgement feedback information sent for the Msg4. For example, the term "HARQ acknowledgement feedback information sent for Msg4" in the present disclosure may be replaced by "information transmitted on the common PUCCH". The term "HARQ acknowledgement feedback information" may be replaced by "HARQ-ACK feedback information".

Here, a terminal involved in the present disclosure may be, but is not limited to, a mobile phone, a wearable device, a vehicle-mounted terminal, a road side unit (RSU), a smart home terminal, an industrial sensor device and/or a medical device, or the like. In some embodiments, the terminal may be a Redcap terminal or an NR terminal of a predetermined version (e.g., an R17 NR terminal). No limitation is given here.

The access network device involved in the present disclosure may be a base station, which may be a base station in the fifth generation mobile communication technology or other evolved base stations, and is not limited here.

In an embodiment, Msg3 sent by the terminal based on configuration information is received, where the Msg3 includes first information, and the first information includes at least one of: repetition request information for HARQ acknowledgement feedback information sent for Msg4, or repetition capability information for HARQ acknowledgement feedback information sent for Msg4. The configuration information is sent by the network device via system information block (SIB) information in a broadcast manner.

In an embodiment, the repetition request information is used to request the repetition of the HARQ acknowledgement feedback information sent for the Msg4.

In an embodiment, the repetition capability information indicates whether the terminal supports or does not support the repetition of the HARQ acknowledgement feedback information sent for the Msg4. It should be noted that if the repetition capability information indicates that the terminal supports the repetition of the HARQ acknowledgement feedback information sent for the Msg4, the terminal may implement the repetition of the HARQ acknowledgement feedback information sent for the Msg4. For example, after sending the repetition request information to the base station and receiving repetition acknowledgement information from the base station, the terminal may perform the repetition of the HARQ acknowledgement feedback information sent for the Msg4.

In an embodiment, Msg3 is received, where the Msg3 includes first information, and the first information includes repetition request information for the HARQ acknowledgement feedback information sent for the Msg4. The first information may be indicated by a first information field. When the Msg3 includes the first information field, it indicates that the first information includes repetition request information for the HARQ acknowledgement feedback information sent for the Msg4. It should be noted that, when the first information includes the repetition request information for the HARQ acknowledgement feedback information sent for the Msg4, it is determined by default that the terminal has the repetition request capability for the HARQ acknowledgement feedback information sent for the Msg4.

In an embodiment, Msg3 is received, where the Msg3 includes first information, and the first information includes repetition capability information for the HARQ acknowledgement feedback information sent for the Msg4. For example, the repetition capability information indicates that the terminal does not have the repetition capability, in which case the terminal cannot execute the repetition mechanism; or the repetition capability information indicates that the terminal has the repetition capability, in which case the terminal can execute the repetition mechanism. For example, the first information may be indicated by a second information field. When the Msg3 does not include the second information field, it indicates that the terminal does not have the repetition capability; and when the Msg3 includes the second information field, it indicates that the terminal has the repetition capability. It should be noted that after the terminal sends the first information including the repetition capability information for the HARQ acknowledgement feedback information sent for the Msg4 to the access network device, the repetition may be performed directly, or the repetition may be performed only after the repetition request information for the HARQ acknowledgement feedback information sent for the Msg4 is sent to the access network device, which is not limited here.

In an embodiment, a subPDU carried by the Msg3 carries the first information, where the first information includes at least one of: repetition request information for HARQ acknowledgement feedback information sent for Msg4, or repetition capability information for HARQ acknowledgement feedback information sent for Msg4.

In an embodiment, Msg3 is received, where the Msg3 includes first information, and the first information includes at least one of: repetition request information for HARQ acknowledgement feedback information sent for Msg4, or repetition capability information for HARQ acknowledgement feedback information sent for Msg4; and the subPDU includes an MAC subheader and a first MAC CE, and the first MAC CE carries the first information.

In an embodiment, Msg3 is received, where the Msg3 includes first information, and the first information includes at least one of: repetition request information for HARQ acknowledgement feedback information sent for Msg4, or repetition capability information for HARQ acknowledgement feedback information sent for Msg4; and the Msg3 is used to carry a C-RNTI or a CCCH SDU.

In an embodiment, Msg3 is received, where the Msg3 includes first information, and the first information includes at least one of: repetition request information for HARQ acknowledgement feedback information sent for Msg4, or repetition capability information for HARQ acknowledgement feedback information sent for Msg4; and the subPDU includes an MAC subheader and a first MAC CE, and the first MAC CE carries the first information. An LCID carried by the MAC subheader indicates the first MAC CE.

In an embodiment, Msg3 is received, where the Msg3 includes first information, and the first information includes at least one of: repetition request information for HARQ acknowledgement feedback information sent for Msg4, or repetition capability information for HARQ acknowledgement feedback information sent for Msg4; and the subPDU includes an MAC subheader and a first MAC CE, and the first MAC CE carries the first information. An LCID of the MAC subheader indicates the first MAC CE, and the size of the first MAC CE is 0.

In an embodiment, Msg3 is received, where the Msg3 includes first information, and the first information includes at least one of: repetition request information for HARQ acknowledgement feedback information sent for Msg4, or repetition capability information for HARQ acknowledgement feedback information sent for Msg4; the subPDU includes an MAC subheader and a first MAC CE, the first MAC CE indicates that the first information is carried, and the first MAC CE is identified by an LCID or extended LCID (eLCID) in the MAC subheader. The LCID or eLCID may be selected from reserved IDs in the related art. For example, IDs 37 to 42 are reserved LCIDs, and LCID=40 is selected from the IDs 37 to 42 to indicate the first MAC CE (as shown in FIG. 7). For example, IDs 64 to 292 are reserved eLCIDs, and eLCID=66 is selected from the IDs 64 to 292 to indicate the first MAC CE.

In an embodiment, an MAC subPDU including the first MAC CE includes an MAC subheader portion and a fixed-sized portion, where the size of the MAC CE portion is fixed to 0.

In an embodiment, Msg3 is received, where the Msg3 includes first information, and the first information includes at least one of: repetition request information for HARQ acknowledgement feedback information sent for Msg4, or repetition capability information for HARQ acknowledgement feedback information sent for Msg4; and the subPDU includes an MAC subheader and a first MAC CE, and the first MAC CE indicates that the first information is carried. An LCID of the MAC subheader indicates the first MAC CE, and the LCID is an ID determined from the reserved LCIDs.

It should be noted that those skilled in the art may understand that the methods provided in the embodiments of the present disclosure may be executed alone or together with some methods in the embodiments of the present disclosure or some methods in related technologies.

As shown in FIG. 6, this embodiment provides an information indication method, performed by an access network device and including the following step.

At step 61, a fifth message is received.

The fifth message includes first information, and the first information includes at least one of: repetition request information for a sixth message, or repetition capability information for a sixth message.

In an embodiment, the fifth message may be Msg3 or other information, which is not limited here.

In an embodiment, a fifth message sent by a terminal based on configuration information is received, where the fifth message includes first information, and the first information includes at least one of: repetition request information for a sixth message, or repetition capability information for a sixth message. The configuration information is sent by a network device via SIB information in a broadcast manner.

In an embodiment, a fifth message is received, where the fifth message includes first information, and the first information includes repetition request information for a sixth message. The first information may be indicated by a first information field. When the fifth message includes the first information field, it indicates that the first information includes repetition request information for the sixth message. It should be noted that, when the first information includes the repetition request information for the sixth message, it is determined by default that the terminal has the repetition request capability for the sixth message.

In an embodiment, a fifth message is received, where the fifth message includes first information, and the first information includes repetition capability information of the terminal for the sixth message. For example, the repetition capability information indicates that the terminal does not have the repetition capability, in which case the terminal cannot execute the repetition mechanism; or the repetition capability information indicates that the terminal has the repetition capability, in which case the terminal can execute the repetition mechanism. For example, the first information may be indicated by a second information field. When the fifth message does not include the second information field, it indicates that the terminal does not have the repetition capability; and when the fifth message includes the second information field, it indicates that the terminal has the repetition capability. It should be noted that after the terminal sends the first information including the repetition capability information of the terminal for the sixth message to the access network device, the repetition may be performed directly, or the repetition may be performed only after the repetition request information for the sixth message is sent to the access network device, which is not limited here.

In an embodiment, a subPDU carried by the fifth message carries the first information, where the first information includes at least one of: the repetition request information for the sixth message, or the repetition capability information for the sixth message.

In an embodiment, a fifth message is received, where the fifth message includes first information, and the first information includes at least one of: repetition request information for a sixth message, or repetition capability information for a sixth message; and the subPDU includes an MAC subheader and a first MAC CE, and the first MAC CE carries the first information.

In an embodiment, a fifth message is received, where the fifth message includes first information, and the first information includes at least one of: repetition request information for a sixth message, or repetition capability information for a sixth message; and the fifth message is used to carry a C-RNTI or a CCCH SDU.

In an embodiment, a fifth message is received, where the fifth message includes first information, and the first information includes at least one of: repetition request information for a sixth message, or repetition capability information of the terminal for a sixth message; and the subPDU includes an MAC subheader and a first MAC CE, and the first MAC CE carries the first information. An LCID carried by the MAC subheader indicates the first MAC CE.

In an embodiment, the size of the first MAC CE is 0.

In an embodiment, a fifth message is received, where the fifth message includes first information, and the first information includes at least one of: repetition request information for a sixth message, or repetition capability information for a sixth message; and the MAC information includes a first MAC CE, the first MAC CE indicates the first information, and the first MAC CE is identified by an LCID or eLCID in the MAC subheader. The LCID or eLCID may be selected from reserved IDs in the related art. For example, IDs 37 to 42 are reserved LCIDs, and LCID=40 is selected from the IDs 37 to 42 to indicate the first MAC CE (as shown in FIG. 7). For example, IDs 64 to 292 are reserved eLCIDs, and eLCID=66 is selected from the IDs 64 to 292 to indicate the first MAC CE.

In an embodiment, an MAC subPDU including the first MAC CE includes an MAC subheader portion and a fixed-sized portion, where the size of the MAC CE portion is fixed to 0.

In an embodiment, a fifth message is received, where the fifth message includes first information, and the first information includes at least one of: repetition request information for a sixth message, or repetition capability information for a sixth message; and the subPDU includes an MAC subheader and a first MAC CE, and the first MAC CE indicates that the first information is carried. An LCID of the MAC subheader indicates the first MAC CE, and the LCID is an ID determined from the reserved LCIDs.

It should be noted that those skilled in the art may understand that the methods provided in the embodiments of the present disclosure may be executed alone or together with some methods in the embodiments of the present disclosure or some methods in related technologies.

In order to better understand the embodiments of the present disclosure, the present disclosure is further described below by an illustrative embodiment.

In an embodiment, demand indication information (corresponding to the first information in the present disclosure) includes MAC information in Msg3, where the demand indication information is sent by a UE to a base station, indicating an Msg4 HARQ-ACK repetition request (corresponding to the repetition request information in the present disclosure) or an Msg4 HARQ-ACK repetition capability (corresponding to the repetition capability information in the present disclosure).

In an embodiment, a new MAC CE is added in the Msg3 to indicate an Msg4 HARQ-ACK repetition request or repetition capability report.

In an embodiment, the newly added MAC CE is indicated by an LCID in an MAC subheader. For example, the meaning of the LCID may be predefined. The size of the MAC CE is fixed to 0, that is, only one MAC subheader exists.

In an embodiment, at least one LCID from reserved IDs 37 to 42 indicates an Msg4 HARQ-ACK repetition request or repetition capability report.

In an embodiment, if the base station configures an RSRP threshold for the UE via an SIB and the RSRP threshold is not a maximum value, then when the UE has the Msg4 HARQ-ACK repetition capability and an RSRP value measured based on a downlink signal is lower than the RSRP threshold, the Msg3 sent by the UE to a gNB includes the newly added MAC CE. This MAC CE indicates that the UE has an Msg4 HARQ-ACK repetition request.

In other cases, the Msg3 sent by the UE to the gNB does not include the newly added MAC CE.

In an embodiment, if the base station does not configure an RSRP threshold for the UE via an SIB, or if the base station configures an RSRP threshold for the UE via an SIB and the RSRP threshold is a maximum value, then when the UE has the Msg4 HARQ-ACK repetition capability, the Msg3 sent by the UE to the gNB includes the newly added MAC CE. This MAC CE indicates that the UE has the Msg4 HARQ-ACK repetition capability.

When the UE does not have the Msg4 HARQ-ACK repetition capability, the Msg3 sent by the UE to the gNB does not include the newly added MAC CE.

In an embodiment, the downlink signal may be a synchronization reference signal, such as a synchronization broadcast block and/or Msg2.

In an embodiment, when the Msg3 does not include this MAC CE, the UE may at least ensure rate matching by zero padding.

In an embodiment, the newly added MAC CE is applicable to the Msg3 carrying a C-RNTI MAC CE or a CCCH SDU.

In an embodiment, referring to FIG. 7, a method for an MAC CE to indicate first information is shown.

As shown in FIG. 8, embodiments of the present disclosure provide an information indication apparatus, including a sending module 81 configured to send Msg3, where the Msg3 includes first information, and the first information includes at least one of: repetition request information for information transmitted on a common PUCCH, or repetition capability information for information transmitted on a common PUCCH.

It should be noted that those skilled in the art may understand that the methods provided in the embodiments of the present disclosure may be executed alone or together with some methods in the embodiments of the present disclosure or some methods in related technologies.

As shown in FIG. 9, embodiments of the present disclosure provide an information indication apparatus, including a receiving module 91 configured to receive Msg3, where the Msg3 includes first information, and the first information includes at least one of: repetition request information for information transmitted on a common PUCCH, or repetition capability information for information transmitted on a common PUCCH.

It should be noted that those skilled in the art may understand that the methods provided in the embodiments of the present disclosure may be executed alone or together with some methods in the embodiments of the present disclosure or some methods in related technologies.

Embodiments of the present disclosure provide an information indication system, including: a terminal configured to execute any information indication method performed by the terminal in the present disclosure, and an access network device configured to execute any information indication method performed by the access network device in the present disclosure.

Embodiments of the present disclosure provide a communication device, including a processor, and a memory for storing instructions executable by the processor, where the processor is configured to implement the information indication method described in any embodiment of the present disclosure when running the executable instructions.

The processor may include various types of storage media that are non-transitory computer storage media that may continue to memorize information stored thereon after the communication device is powered down.

The processor may be connected to the memory via a bus or the like for reading the executable program stored on the memory.

Embodiments of the present disclosure further provide a computer storage medium having stored therein executable programs that, when executed by a processor, cause the information indication method described in any embodiment of the present disclosure to be implemented.

With respect to the apparatuses or devices in the above embodiments, the specific manners for performing operations for individual modules therein have been described in detail in the embodiments regarding the methods, which will not be elaborated herein.

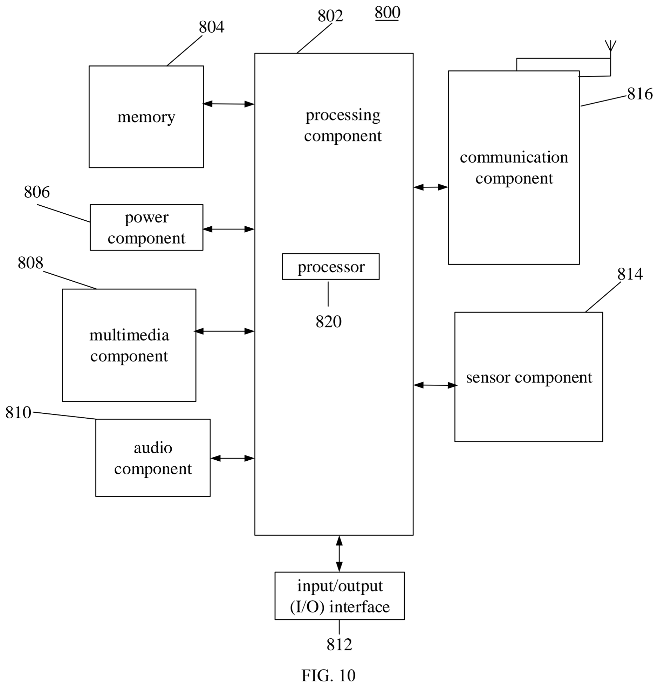

As shown in FIG. 10, an embodiment of the present disclosure provides a terminal.

Referring to FIG. 10, the terminal 800 provided in this embodiment of the present disclosure may be a mobile phone, a computer, a digital broadcast terminal, a messaging device, a game console, a tablet device, a medical device, a fitness device, a personal digital assistant, or the like.

Referring to FIG. 10, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, phone calls, data communications, camera operations, and recording operations. The processing component 802 may include one or more processors 820 to execute instructions to complete all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in location of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the terminal 800 and other devices. The terminal 800 may access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an illustrative embodiment, there is also provided a non-transitory computer-readable storage medium including instructions, such as included in the memory 804, executable by the processor 820 in the terminal 800, for completing the above-mentioned methods. For example, the non-transitory computer-readable storage medium may be a ROM, a random access memory (RAM), a CD-ROM, a magnetic tape, a floppy disc, an optical data storage device, and the like.

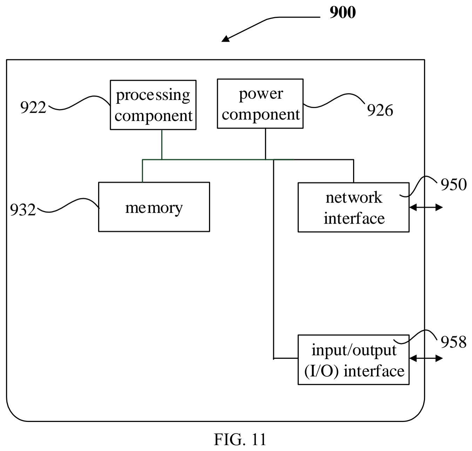

As shown in FIG. 11, embodiments of the present disclosure show a structure of a base station. For example, the base station 900 may be provided as a network side device.

Referring to FIG. 11, the base station 900 includes a processing component 922 and a memory resource represented by a memory 932. The processing component 922 may further include one or more processors. The memory 932 is configured to store instructions executable by the processing component 922, such as an application program. The application program stored in the memory 932 may include one or more modules each corresponding to a set of instructions. In addition, the processing component 922 is configured to execute the instructions to perform any of the aforementioned methods applied to the base station.

The base station 900 further includes a power component 926 configured to perform a power management on the base station 900, a wired or wireless network interface 950 configured to connect the base station 900 to the network, and an input/output (I/O) interface 958. The base station 900 may operate an operating system stored in the memory 932, such as Windows Server^{™}, Mac OS X^{™}, Unix^{™}, Linux^{™}, Free BSD^{™}, or the like.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including common knowledge or conventional technical means known in the art but not disclosed in the present disclosure. The specification and examples should be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. An information indication method, performed by a terminal, the information indication method comprising:
sending a message 3 (Msg3),
wherein the Msg3 comprises first information, and the first information comprises at least one of:
repetition request information for information transmitted on a common physical uplink control channel (PUCCH); or
repetition capability information for information transmitted on a common PUCCH.

2. The information indication method according to claim 1, wherein the information transmitted on the common PUCCH is hybrid automatic repeat request (HARQ) acknowledgement feedback information sent for a message 4 (Msg4).

3. The information indication method according to claim 1, wherein a sub-protocol data unit (subPDU) carried by the Msg3 carries the first information.

4. The information indication method according to claim 3, wherein the subPDU comprises a media access control (MAC) subheader and a first MAC control element (CE), and the first MAC CE carries the first information.

5. The information indication method according to claim 4, wherein a logical channel identifier (LCID) carried by the MAC subheader indicates the first MAC CE.

6. The information indication method according to claim 5, wherein the LCID is an identifier determined from reserved LCIDs.

7. The information indication method according to claim 5, wherein a size of the first MAC CE is 0.

8. The information indication method according to claim 3, further comprising:
determining that the subPDU does not comprise the first MAC CE, and performing rate matching by padding.

9. The information indication method according to claim 3, wherein the Msg3 further comprises a cell radio network temporary identifier (C-RNTI) or a common control channel (CCCH) service data unit (SDU).

10. An information indication method, performed by an access network device, the information indication method comprising:
receiving a message 3 (Msg3),
wherein the Msg3 comprises first information, and the first information comprises at least one of:
repetition request information for information transmitted on a common physical uplink control channel (PUCCH); or
repetition capability information for information transmitted on a common PUCCH.

11. The information indication method according to claim 10, wherein the information transmitted on the common PUCCH is hybrid automatic repeat request (HARQ) acknowledgement feedback information sent for a message 4 (Msg4).

12. The information indication method according to claim 10, wherein a sub-protocol data unit (subPDU) carried by the Msg3 carries the first information.

13. The information indication method according to claim 12, wherein the subPDU comprises a media access control (MAC) subheader and a first MAC control element (CE), and the first MAC CE carries the first information.

14. The information indication method according to claim 13, wherein a logical channel identifier (LCID) carried by the MAC subheader indicates the first MAC CE.

15. The information indication method according to claim 14, wherein the LCID is an identifier determined from reserved LCIDs.

16. The information indication method according to claim 14, wherein a size of the first MAC CE is 0.

17. The information indication method according to claim 12, wherein the Msg3 further comprises a cell radio network temporary identifier (C-RNTI) or a common control channel (CCCH) service data unit (SDU).

18. An information indication apparatus, comprising:
a sending module configured to send a message 3 (Msg3),
wherein the Msg3 comprises first information, and the first information comprises at least one of:
repetition request information for information transmitted on a common physical uplink control channel (PUCCH); or
repetition capability information for information transmitted on a common PUCCH.

19. An information indication apparatus, comprising:
a receiving module configured to receive a message 3 (Msg3),
wherein the Msg3 comprises first information, and the first information comprises at least one of:
repetition request information for information transmitted on a common physical uplink control channel (PUCCH); or
repetition capability information for information transmitted on a common PUCCH.

20. A communication system, comprising:
a terminal configured to execute the information indication method according to any one of the above claims 1 to 9; and
an access network device configured to execute the information indication method according to any one of the above claims 10 to 17.

21. A communication device, comprising:
one or more processors,
wherein the one or more processors are configured to call instructions to enable the communication device to execute the information indication method according to any one of claims 1 to 9 or any one of claims 10 to 17.

22. A storage medium having stored therein instructions that, when executed on a communication device, cause the communication device to execute the information indication method according to any one of claims 1 to 9 or any one of claims 10 to 17.
